Europäisches Patentamt

European Patent Office

Office européen des brevets

(11) Veröffentlichungsnummer: **0 473 874 A2**

# EUROPÄISCHE PATENTANMELDUNG

(21) Anmeldenummer: **91105821.2**

(51) Int. Cl.5: **F16B 39/16**

(22) Anmeldetag: **12.04.91**

(30) Priorität: **03.09.90 DE 4027860**

(43) Veröffentlichungstag der Anmeldung:
**11.03.92 Patentblatt 92/11**

(84) Benannte Vertragsstaaten:
**DE ES FR GB IT SE**

(71) Anmelder: **VDO Adolf Schindling AG**
**Gräfstrasse 103**
**W-6000 Frankfurt/Main 90(DE)**

(72) Erfinder: **Johann, Hans-Jürgen**
**Dr. Fuchs Strasse 9**
**W-6382 Friedrichsdorf(DE)**

(74) Vertreter: **Klein, Thomas, Dipl.-Ing. (FH)**
**Sodener Strasse 9 Postfach 6140**
**W-6231 Schwalbach a. Ts.(DE)**

(54) Verfahren zum Sichern einer Schraubverbindung sowie nach diesem Verfahren gesicherte Schraubverbindung.

(57) Eine Stellschraube (7) eines Bypass-Stellers (1) wird dadurch gesichert, daß mittels eines Laserstrahles das Gewinde der Stellschraube (7) an zumindest einer Stelle deformiert wird, so daß eine Deformation (9) entsteht, durch die ein selbsttätiges Herausschrauben der Stellschraube (7) aus einem Rückschlußkörper (8) ausgeschlossen ist.

Fig. 1

EP 0 473 874 A2

Die Erfindung betrifft ein Verfahren zum Sichern einer Schraubverbindung zwischen einem Stellteil und einem aus einem anderen Metall als das Stellteil bestehenden Bauteil. Weiterhin betrifft die Erfindung eine nach diesem Verfahren gesicherte Schraubverbindung.

Schraubverbindungen können auf sehr unterschiedliche Art und Weise gesichert werden. Bekannt sind zum Beispiel unter eine Mutter zu legende Federscheiben. Eine zuverlässigere Art der Sicherung besteht darin, nach dem Festziehen einer Mutter eine Lasche hochzubiegen, so daß diese gegen eine Seitenfläche der Mutter anliegt und diese dadurch vor einem Verdrehen sichert. Sehr geläufig ist auch das Kontern von Muttern. Nachteilig bei Schraubsicherungen dieser Art ist es, daß die zu sichernde Schraube oder Mutter zum Zwekke des Sicherns gut zugänglich sein muß und daß das Sichern einen aufwendigen und deshalb kostenintensiven Arbeitsgang darstellt.

Weniger aufwendig ist es, durch einen Kleber das Gewinde der Schraubverbindung zu sichern. Das setzt jedoch voraus, daß die Schraubverbindung nicht so heiß werden darf, daß der Klebstoff zerstört wird. Das wäre beispielsweise bei Schraubverbindungen im Kraftfahrzeug der Fall, weil dort oftmals mit Temperaturen bis über 100 Grad Celsius gerechnet werden muß. Ebenfalls einfach ist es, mittels eines Körners das Gewinde an einer Stelle oder mehreren Stellen zu deformieren. Oftmals ist das jedoch wegen der damit verbundenen Schlagbeanspruchung der Bauteile nicht möglich.

Der Erfindung liegt die Aufgabe zugrunde, ein Verfahren zum Sichern einer Schraubverbindung zu schaffen, welches besonders rasch und einfach durchführbar ist und auch bei Schraubverbindungen von Teilen aus unterschiedlichen Metallen durchgeführt werden kann und durch welches eine auch bei hohen Temperaturen haltbare Schraubensicherung entsteht. Weiterhin soll eine nach dem erfindungsgemäßen Verfahren gesicherte Schraubverbindung geschaffen werden.

Die erstgenannte Aufgabe wird erfindungsgemäß dadurch gelöst, daß mittels eines Laserstrahles von der Stirnseite des Stellteiles her das Gewinde des Stellteiles und/oder des Bauteiles an zumindest einer Stelle durch Anschmelzen deformiert wird.

Durch diese Verfahrensweise läßt sich auch bei unterschiedlichen Werkstoffen der beiden ineinandergeschraubten, zu sichernden Teile eine zuverlässige Sicherung erreichen. Dabei ist es ganz besonders vorteilhaft, daß die zu sichernden Teile nur von einem punktförmigen Laserstrahl getroffen werden müssen. Deshalb kann das Sichern nach der Montage der Bauteile leicht erfolgen, indem lediglich zum Durchtritt des Laserstrahles eine kleine Öffnung in einem Außenteil vorgesehen wird. Da das Sichern kraftlos erfolgt, kann es durch das Sichern nicht zu einer Beeinflussung oder gar Beschädigung anderer Teile kommen. Wenn man die gesicherte Schraubverbindung mit größerer Kraft löst, so schneidet sich das Gewinde in den beschädigten Bereich selbsttätig wieder einen richtig verlaufenden Gewindegang, so daß die Teile erneut verwendet und gesichert werden können.

Die Deformation des Gewindes kann an beliebigen Stellen an der Stirnseite des Stellteiles sowohl beim Außen- als auch beim Innengewinde erfolgen, wenn gemäß einer vorteilhaften Weiterbildung des Verfahrens zum Erreichen des Gewindeflanke des Außengewindes an der Einschraubseite des Innengewindes der Schraubverbindung eine umlaufende Fase angebracht wird. Ohne eine solche Fase müßte man mit dem Laserstrahl genau diejenige Stelle treffen, an der das Außengewinde in das Innengewinde einläuft.

Die Losbrechkraft der Schraubensicherung kann man auf einfache Weise dadurch erhöhen, daß mittels des Laserstrahles an mehreren Stellungen unmittelbar nebeneinander das Gewinde deformiert wird.

Eine Schraubverbindung zwischen einem Stellteil und einem aus einem anderen Metall als das Stellteil bestehenden Bauteil, welche gemäß dem Verfahren nach zumindest einem der vorangehenden Ansprüche gesichert ist, zeichnet sich dadurch aus, daß das Gewinde des Stellteiles und/oder des Bauteiles durch Anschmelzen mittels eines Laserstrahles an zumindest einer Stelle eine Deformation aufweist. Eine solche gesicherte Schraubverbindung ist sehr einfach herzustellen und erfordert beim Sichern keine Krafteinwirkung. Weiterhin braucht die Schraubverbindung zum Zwecke des Sicherns nur für den scharf gebündelten Laserstrahl zugänglich zu sein.

Das Sichern der Schraubverbindung ist an beliebigen Umfangsstellen der Stirnseite der beiden zu sichernden Bauteile möglich, wenn an der Einschraubseite des Innengewindes eine umlaufende Fase vorgesehen ist.

Die Losbrechkraft der Schraubsicherung kann den jeweiligen Erfordernissen dadurch angepaßt werden, daß an mehreren Stellen unmittelbar hintereinander eine Deformation des Gewindes vorgesehen ist.

Besonders vorteilhaft ist es, wenn es sich bei dem Stellteil um eine in ein Innengewinde eines Rückschlußkörpers eines elektromagnetischen Stellgliedes für den Bypass einer Drosselklappe eines Kraftfahrzeugmotors geschraubte Stellschraube handelt.

Zur weiteren Verdeutlichung des erfindungsgemäßen Verfahrens und einer erfindungsgemäß gesicherten Schraubverbindung wird nachfolgend auf die Zeichnung Bezug genommen. Diese zeigt in

Fig. 1 einen Schnitt durch ein elektromagnetisches Stellglied mit einer erfindungsgemäß gesicherten Schraubverbindung,

Fig. 2 einen Schnitt durch einen gegenüber der Figur 1 stark vergrößerten Endbereich der Schraubverbindung,

Fig. 3 einen der Figur 2 entsprechenden Schnitt, jedoch mit einer weniger weit eingeschraubten Stellschraube,

Fig. 4 eine Ansicht der Schraubverbindung von der Stirnseite her.

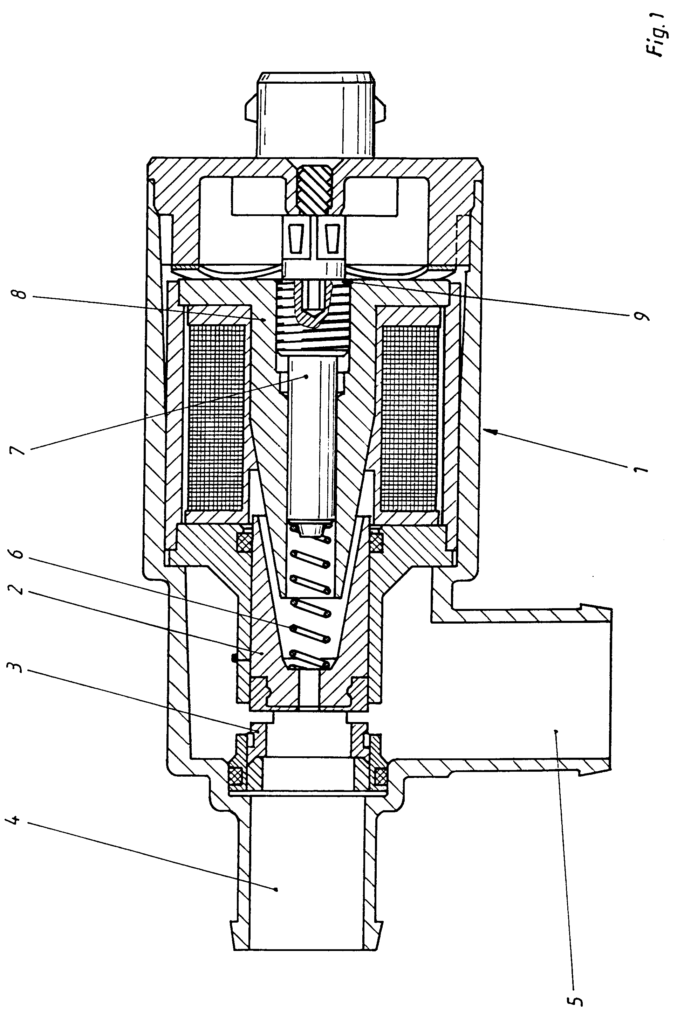

Die Figur 1 Zeigt einen Bypass-Steller 1 für einen Bypass einer Drosselklappe eines Drosselklappenstutzens. In ihm wird durch Verschiebung eines Ankers 2 eine Steuerhülse 3 verschoben, die eine Verbindung zwischen einem Lufteinlaß 4 und einem Luftauslaß 5 steuert. Der Anker 2 wird mittels einer Rückstellfeder 6 in eine Grundstellung vorgespannt. Diese Rückstellfeder 6 liegt mit ihrem anderen Ende gegen eine Stellschraube 7 an, die in einen Rückschlußkörper 8 eingeschraubt ist. Der Rückschlußkörper 8 besteht aus Eisen, während die Stellschraube 7 aus Messing gefertigt ist.

Wichtig für die Erfindung ist die Sicherung der Stellschraube 7 im Rückschlußkörper 8 nach ihrer genauen Justage. Erfindungsgemäß erfolgt diese mittels eines Lasertrahles dadurch, daß ihr Gewinde und das Gewinde des Rückschlußkörpers von der Stirnseite des Rückschlußkörpers 8 her deformiert wird, so daß an zumindest einer Stelle eine Deformation 9 entsteht.

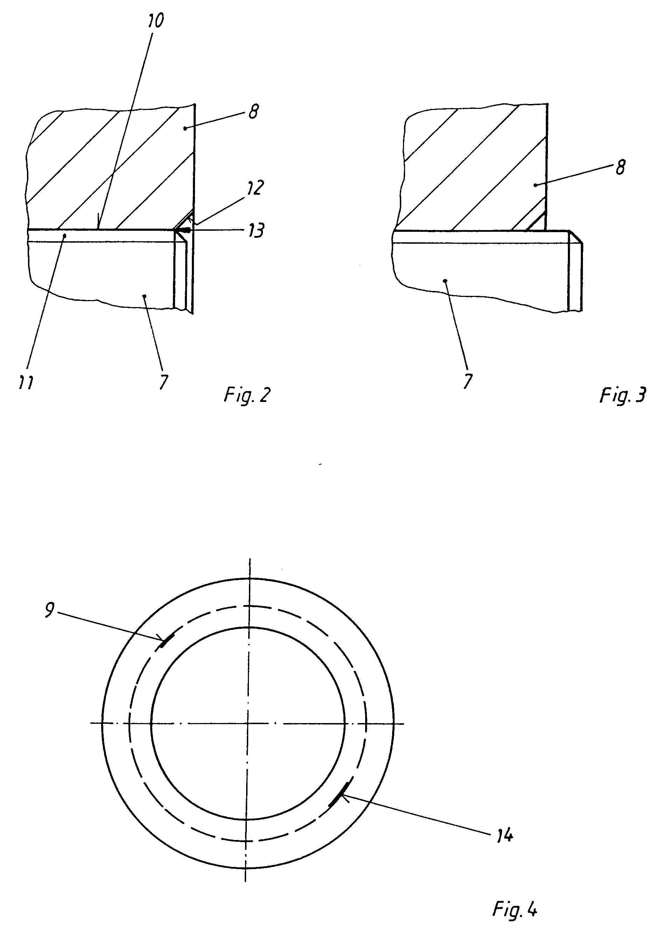

Die Figur 2 zeigt stark vergrößert einen Teilbereich des Rückschlußkörpers 8, der ein Innengewinde 10 hat, in welches die Stellschraube 7 mit Außengewinde 11 geschraubt ist. An der Einschraubseite des Rückschlußkörpers 8 ist eine umlaufende Fase 12 vorgesehen. Mittels eines Pfeiles 13 ist gezeigt, wie ein Laserstrahl zu richten ist, damit an zumindest einer Stelle das Innengewinde 10 und das Außengewinde 11 so deformiert werden, daß die Schraubverbindung gesichert ist.

Die Figur 3 verdeutlicht, daß die erfindungsgemäße Schraubensicherung auch möglich ist, wenn die Stellschraube 7 in der zu sichernden Position etwas aus dem Rückschlußkörper herausragt.

Figur 4 zeigt, daß die Sicherung entweder durch nur eine Deformation 9 an einer Stelle, oder durch mehrere Deformationsstellen 14 nebeneinander erfolgen kann.

**Patentansprüche**

1. Verfahren zum Sichern einer Schraubverbindung zwischen einem Stellteil und einem aus einem anderen Metall als das Stellteil bestehenden Bauteil, dadurch gekennzeichnet, daß mittels eines Laserstrahles von der Stirnseite des Stellteiles her das Gewinde des Stellteiles und/oder des Bauteiles an zumindest einer Stelle durch Anschmelzen deformiert wird.

2. Verfahren nach Anspruch 1, dadurch gekennzeichnet, daß zum Erreichen der Gewindeflanke des Außengewindes an der Einschraubseite des Innengewindes der Schraubverbindung eine umlaufende Fase angebracht wird.

3. Verfahren nach den Ansprüchen 1 oder 2, dadurch gekennzeichnet, daß mittels des Laserstrahles an mehreren Stellungen unmittelbar nebeneinander das Gewinde deformiert wird.

4. Schraubverbindung zwischen einem Stellteil und einem aus einem anderen Metall als das Stellteil bestehenden Bauteil, welche gemäß dem Verfahren nach zumindest einem der vorangehenden Ansprüche gesichert ist, dadurch gekennzeichnet, daß das Gewinde des Stellteiles (Stellschraube 7) und/oder des Bauteiles (Rückschlußkörper 8) durch Anschmelzen mittels eines Laserstrahles an zumindest einer Stelle eine Deformation (9) aufweist.

5. Schraubverbindung nach Anspruch 4, dadurch gekennzeichnet, daß an der Einschraubseite des Innengewindes (10) eine umlaufende Fase (12) vorgesehen ist.

6. Schraubverbindung nach den Ansprüchen 4 oder 5, dadurch gekennzeichnet, daß an mehreren Stellen (14) unmittelbar nebeneinander eine Deformation des Gewindes vorgesehen ist.

7. Schraubverbindung nach zumindest einem der Ansprüche 4 bis 6, dadurch gekennzeichnet, daß es sich bei dem Stellteil um eine in ein Innengewinde (10) eines Rückschlußkörpers (8) eines elektromagnetischen Stellgliedes für den Bypass einer Drosselklappe eines Kraftfahrzeugmotors geschraubte Stellschraube (7) handelt.

Fig. 1

Fig. 2

Fig. 3

Fig. 4